Europäisches Patentamt

(19) European Patent Office

Office européen des brevets

(11) Publication number: **0 228 724**
**B1**

(12) EUROPEAN PATENT SPECIFICATION

(45) Date of publication of the patent specification: 29.08.90

(51) Int. Cl.⁵: **B03B 9/06**, B03B 5/40

(21) Application number: 86201987.4

(22) Date of filing: 13.11.86

(54) Separator for aggregate.

(30) Priority: 19.12.85 IT 8345085

(43) Date of publication of application:
15.07.87 Bulletin 87/29

(45) Publication of the grant of the patent:
29.08.90 Bulletin 90/35

(84) Designated Contracting States:
AT BE CH DE ES FR GB GR LI LU NL SE

(56) References cited:
CH-A- 243 267
DE-A- 2 602 306
FR-A- 1 405 290
FR-A- 2 394 333
US-A- 3 568 839
US-A- 3 848 813
US-A- 3 897 215
US-A- 4 203 376
US-A- 4 276 155

(73) Proprietor: DANECO DANIELI ECOLOGIA SpA, Via Nazionale 85 - SS. 56, I-33048 San Giovanni al Natisone (UD)(IT)

(72) Inventor: Coletti, Gianni, Via Zuliani 44, I-33030 Forgaria Nel Friuli (PN)(IT)
Inventor: Taverna, Ennio, Via Martignacco 272, I-33100 Udine(IT)

(74) Representative: Petraz, Gilberto Luigi, G.L.P. S.a.s. di Gilberto Petraz P.le Cavedalis 6/2, I-33100 Udine(IT)

ACTORUM AG

## Description

This invention concerns a separator for aggregate which is suitable to separate glass, metals and other heavy inorganic materials in urban wastes so as to obtain an organic waste and a waste consisting of aggregate in separate areas.

To be more exact, this invention concerns a device to separate aggregate such as glass, even in a powdered form, metals, torch batteries and all the other heavy inorganic parts contained in urban wastes which have undergone a trituration and riddling process or in compost obtained by treatment or in other like wastes.

The aggregate separator is therefore of a type which separates the aggregate from suitable triturated and riddled solid urban wastes and thereafter sends the separated organic fraction to the composting process so as to obtain compost for use as an organic fertilizer.

Various systems exist to separate aggregate from compost and from a fraction capable of being composed.

The best known separation systems employ air, but no known system reaches the required efficiency of separation of heavy aggregate.

Thus, even when powdered glass has to be treated, the known systems do not attain the desired level of efficiency. Moreover, the known systems entail considerable power consumption and complex installation and maintenance.

Furthermore, the aggregate leaving the known separators is polluted through continuous contact with the various deteriorating parts, and the aggregate is therefore not easy to store and does not possess adequate stability in the long term owing to the inclusion of material which may become rotten.

Moreover, the known systems to treat such materials suffer considerable wear, and their consumption of parts is very high.

To overcome such drawbacks, the present applicant has designed, tested and embodied a device to separate aggregate which employs water to separate the aggregate from organic material and thus enables not only a proper separation of the components to be carried out but also a considerable energy saving to be obtained with a resulting very restricted employment of power.

US 3 568 839 discloses an apparatus to remove rubbish according to the precharacterizing part of the main claim.

As regards the confirmation of the thank, the position of the spillway, the position where the rubbish is immitted and removed, the method of working of the immersion device and the construction and functioning of the extractor, the teaching of US '839 does not reach the standard of quality and quantity capable of solving the separation.

FR 2 394 333 teaches the provision of a rotary drum with a separator knife.

US 4 203 376 teaches a method for treatment of rubbish with the separation and preparation of solid compost by calcining.

The invention employs water to separate the glass, aggregate (stones, ceramic materials, etc.), metals, batteries and all the heavy parts (including some plastics) which cannot be composed and are included in urban and/or similar industrial wastes and in compost.

It is possible to use the invention to obtain a fraction which can be composted and is almost free of aggregate such as glass, stones, ceramic material, metals and other heavy pollutant elements, by starting with solid, triturated, riddled urban wastes or with compost or with wastes similar to urban wastes and by employing a lowe consumption of energy.

Moreover, it is possible by means of the invention to obtain clean aggregate fractions not containing organic material liable to rot, and therefore clean aggregate which can be easily stored.

The invention permits also noteworthy simplicity of installation and maintenance together with the ability to adjust the various components of the system to suit the specific requirements of the various wastes to be treated.

Furthermore, the maintenance problems are considerably lessened in that the wear on the system can be easily controlled and restricted in the long term

According to the invention a separation vessel full of water collects the material to be treated, which can sink directly to the bottom of the vessel or can remain in suspension.

The surface water flows in one direction only and induces the material remaining in suspension to pass into a zone where an immersion device is working. Such immersion device pushes all the material constantly below the water level and thus breaks any isolating films which may have formed on the material.

The material still afloat after passing the immersion device reaches the neighbourhood of a first weir, from which it is withdrawn together with a given quantity of water by a rotary drum that discharges the organic matter onto a scraper blade, whereas the drum discharges downwards the water, which is collected in a precipitation vessel and, after passing over a second weir, is delivered into a collection vessel.

The heavy fines which cannot be composted (sand, dust glass powder, etc.) are gathered in the precipitation vessel, whereas the sludges are collected in the collection vessel and, as soon as they have been extracted, are combined with the organic fraction to be composted.

The water to be recirculated is put back into circulation from the collection vessel immediately upstream of the zone where the material to be treated falls.

Withdrawal means are comprised in cooperation with the bottom of the separation vessel and are advantageously sloped, and collect the aggregate falling onto the bottom of the vessel and discharge it.

Scrubber nozzles are also positioned at the bottom of the separation vessel and tend to keep in suspension the material falling to the bottom, thus enabling an excellent separation to be obtained and any organic material which has accidentally become deposited together with the heavy aggregate, to be returned to the surface of the water.

Sprayers are also included together with the extractor means and are positioned downstream of the zone of immission of the water to be re-circulated.

Nozzles placed at a tangent to the direction of motion of the aggregate are included advantageously in cooperation with the outlet zone of the aggregate and serve to clean the worm screw extractor means and to provide a last washing operation for the departing aggregate.

Such multiple washings make it possible to obtain aggregate which is non-pollutant and is perfectly washed in a current flowing in the reverse direction, so that the aggregate is easy to store since it is definitely stable in the long term and is free of any material which might rot.

The invention is therefore embodied as disclosed in claim 1 with a separator for aggregate which is suitable to separate heavy aggregate, even in the form of dust, arriving from a trituration or riddling process, from organic material, compost or other like wastes.

Such separator for aggregate is applied correctly to a system which separates aggregates.

The proposed system separates the required products almost completely. Moreover, the aggregate separated by means of other systems always contains organic material and therefore is liable to become rotten.

With the system the aggregate is washed repeatedly and is almost free of any organic substance, thus providing noteworthy ease of storage and disposal.

The energy consumption of this system is considerably less than that of the other systems normally employed hitherto.

The water is fully recirculated and does not lead to pollution, and moreover the quantity required for topping up is negligible compared to that used in other systems.

The compressed air too is employed in very small quantities and serves also to oxygenate the water and the organic material.

According to the system the urban wastes or other like wastes feed a trituration means, at the outlet of which they are collected on a conveyor that delivers them to a single or multiple stage riddle.

A possible means to separate metals and/or any other material unsuitable for the subsequent processes may be included at this segment of the system.

The materials are divided in the riddle according to their various piece sizes; the material having a small piece size is delivered by a conveyor to a separator for aggregate.

The material having an intermediate piece size is sent on a conveyor to a possible separation treatment to separate to a mixing station.

The material having a larger piece size is sent, instead, on a conveyor to a possible treatment process for the production of fuel from wastes and for the separation of paper and/or plastic and for other processes and/or sorting.

The fraction containing the organic material enters the aggregate separator, and as a result of actions which it undergoes, is divided there into the aggregate components comprising glass and ceramic materials (even in a powdered form), stones, metals, batteries, heavy plastics and any other element heavier than water, and into the fraction which can be composted and which consists mainly of organic material with traces of light elements that cannot be composted.

Thereafter the fraction which can be composted is sent on to a possible dewatering process and then reaches the mixing station on a conveyor.

The following material may come to the mixing station: materials of an intermediate piece size arriving from the riddle; biological sludges; water to adjust the humidity; and biological matter to initiate the fermentation process.

This material is then sent on a conveyor from the mixing station to the process of composting the organic fraction and making hygienic any materials still included which cannot be composted.

The attached figures are given as a non-restrictive example and show the following:-

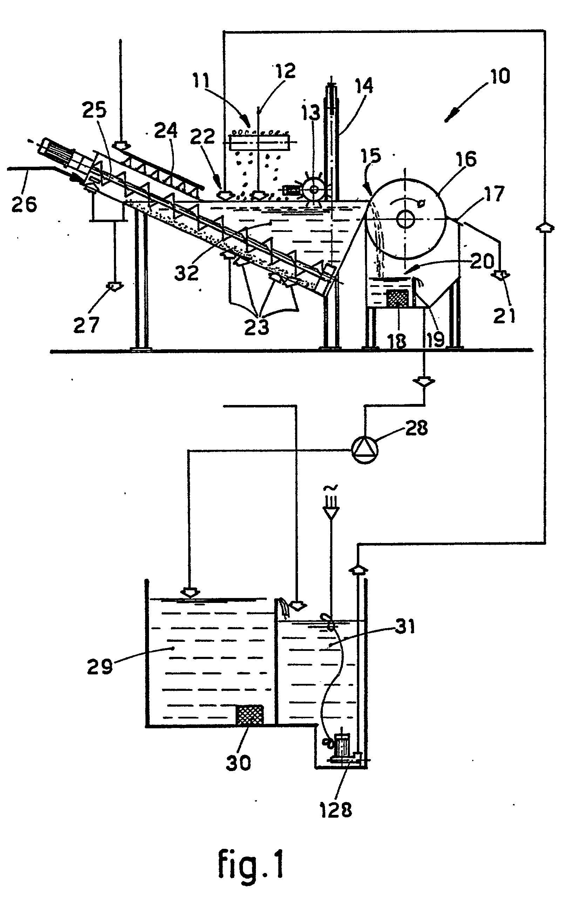

Fig.1 shows diagrammatically a separator complete with the specific pieces of equipment which are useful to understand the method of working of the system;

Fig.2 shows a system that employs such separator.

In the attached figure an aggregate separator 10 cooperates with a means 11 that delivers material to be treated and discharges such material into a dropping zone 12. Upstream of this dropping zone 12 is a continuous delivery of recirculated water 22, which creates a one-way flow of water at least on the surface of a separation vessel 32.

Owing to such continuous flow the materials which have fallen in the zone 12 for treatment and have not sunk at once in the water but have remained in suspension are sent to cooperate with an immersion device 13, which compels all the materials to be immersed and therefore to break any superficial film or containing bubble created when they fell into the water.

Downstream of the immersion device 13, therefore, any material still in suspension will be light and mainly organic material, which passes over a first weir 15 and is picked up by a perforated filter drum 16.

Such light material is removed from the filter drum 16 by a doctor knife 17 and is discharged at 21 as being an organic substance.

The water passing over the first weir 15 falls into a precipitation vessel 20 and, passing over a second weir 19, may be assisted by a pump 28 in dropping into a collection vessel 29.

A means 18 to extract heavy fines which cannot be composted is included in the precipitation vessel 20, whereas a means 30 to extract sludges is located in the lower portion of the collection vessel 29.

The water leaving the collection vessel 29 falls into a storage reservoir 31, whence it is put back into circulation by a pump 128 in a zone 22 for pre-washing the heavy aggregate.

Withdrawal means 25 are located in the lower portion of the separation vessel 32 and may consist of one or more worm screws or of one or more scraper belts or conveyors.

An elevator 14 to raise the withdrawal means 25 out of the separation vessel 32 for maintenance is also shown.

Scrubber nozzles 23 are included in cooperation with the bottom of the separation vessel 32 and with the withdrawal means 25, being advantageously of an orientable type, and serve to deliver a fluid under pressure, which is advantageously a gaseous fluid such as air or another fluid.

The air or fluid leaving the scrubber nozzles 23 tends to re-mix all the heavy material deposited on the bottom of the separation vessel 32 and therefore to bring to the surface any light material drawn down by the descent of the heavy material. Such light material is thus returned to the cycle and passes through the area of the immersion device 13 after an accurate and careful separation and selection.

The material removed by the withdrawal means 25 undergoes a first thorough washing in the area 22, which lies in the neighbourhood of the withdrawal means 25. Such thorough washing is carried out by water recirculated by a pump 128.

Thereafter, the same material removed by the withdrawal means 25 is washed by sprayers 24, which perform continuous washing with clean water, thus eliminating any organic material still contained in the aggregate.

Before reaching the outlet 27 for aggregate, the material is washed once again by tangentially disposed nozzles 26, which not only wash the heavy material departing but also serve to keep the withdrawal means clean.

The pump 128 draws water from the storage reservoir 31, which may comprise an overflow element for topping-up water.

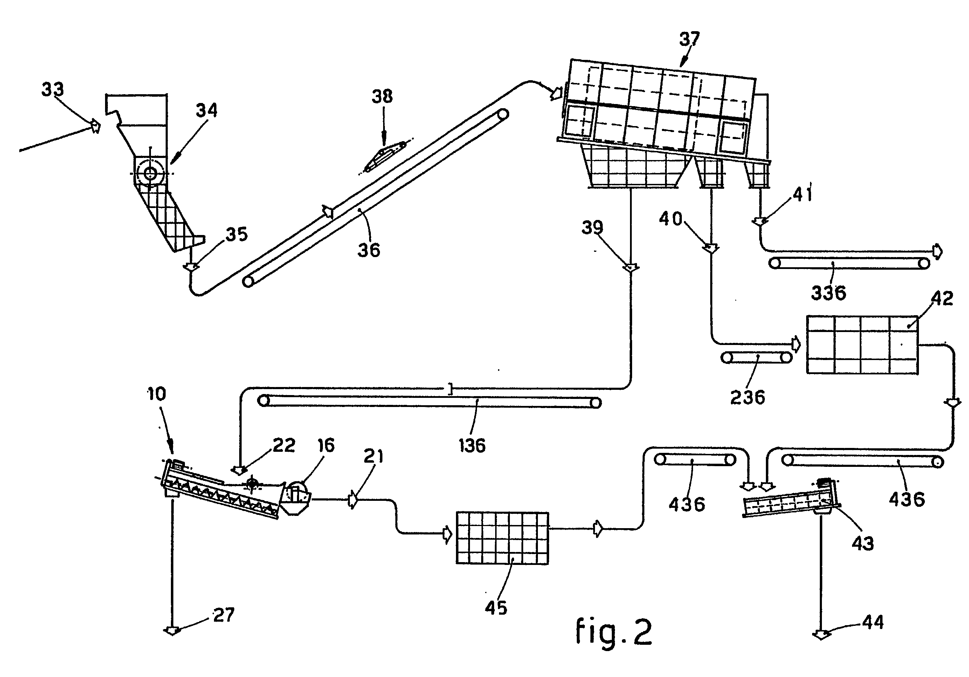

Such separator for aggregate according to the invention is installed advantageously in a new system for separation of aggregate, for instance of the type shown in Fig.2. The process set forth in that example is as follows.

Wastes 33 are fed to a trituration means 34, at the outlet of which they are gathered by a conveyor 36, which delivers them to a single or multiple stage riddle 37. In this tract a possible separator of metals 38 and/or any other material not desired in the subsequent steps may be installed.

The riddle 37 sorts the materials according to their various piece sizes; in fact, the material 39 of a smaller piece size is delivered by a conveyor 136 to the separator for aggregate.

Material 40 of an intermediate piece size is delivered by a conveyor 236 to a possible treatment process for separation of materials 42 which cannot be composted, whence such material is sent on a conveyor 436 to a mixer 43.

Material 41 of a greater piece size is sent, instead, on a conveyor 336 to a possible treatment process for the production of fuel from wastes and for the separation of paper and/or plastics or for other processings and/or sorting.

The fraction of a smaller piece size containing the organic substances enters at 22 the aggregate separator 10, where, following on the actions performed, it is sorted into aggregate components 27 containing glass and ceramics (even in a powdered form), stones, metals, batteries, heavy plastics and any other element heavier than water, and into material 21 which can be composted and which consists mainly of organic material with traces of light elements that cannot be composted.

Thereafter this material is delivered to a possible dewatering process 45 and thence reaches the mixer 43 on the conveyor 436.

Material of an intermediate piece size 40 coming from the riddle 37, biological sludges, water to adjust the humidity and biological material to initiate the fermentation process may arrive at the mixer 43.

Material is sent from the mixer on a conveyor 44 to a process of composting the organic fraction and rendering hygienic any material still included which cannot be composted.

## Claims

1. Separator (10) for aggregate which is suitable to separate heavy aggregate, even in the form of dust, arriving from a trituration or riddling process, from organic material, compost or other like wastes, the separator comprising a separation vessel (32) with water, means (22–24) for the immission of water, an immersion device (13), a first weir (15) with rotary drum (16) and with a precipitation vessel (20), and withdrawal means (25) cooperating with the bottom of the separation vessel (32), the separator (10) being characterized in that the separation vessel (32) has a triangular, vertical, lengthwise section with one horizontal side, the two lower, subhorizontal sides having appreciably differentiated dimensions, the withdrawal means (25) cooperating with the longer, lower, subhorizontal side of the separation vessel (32), the first weir (15) with rotary drum (16) cooperating with a doctor knife (17), being included at the upper edge of the shorter, lower, subhorizontal side and downstream of the immersion device (13), a zone (12) for the dropping of the aggregate being comprised between the means (22–24) for the immission of water upstream of the immersion device (13) and the immersion device (13) itself, which acts transversely to the separation vessel (32) and is conformed as a partially immersed rotary drum with vanes, scrubber nozzles (23) that cooperate with the withdrawal means (25) being also included on the longer subhorizontal side of the separation vessel (32).

2. Separator (10) for aggregate as claimed in claim 1, in which the precipitation vessel (20) comprises a second weir (19) connected to a collection vessel (29), a means (18) to extract heavy fines which cannot be composted being included in the precipitation vessel (20).

3. Separator (10) for aggregate as claimed in claim 1 or 2, in which the collection vessel (29) contains a means (30) to extract sludges.

4. Separator (10) for aggregate as claimed in any claim hereinbefore, in which the scrubber nozzles (23) can be oriented.

5. Separator (10) for aggregate as claimed in any claim hereinbefore, in which a pre-wash (22) is provided, downstream of the dropping zone of the material to be treated (12), in cooperation with the zone of the outlet from the water of the material engaged by the withdrawal means (25).

6. Separator (10) for aggregate as claimed in any claim hereinbefore, in which a further wash (24) is provided downstream of the pre-wash (22).

7. Separator (10) for aggregate as claimed in any claim hereinbefore, in which tangentially disposed wash nozzles (26) are included in cooperation with the outlet of the aggregate (27).

8. Separator (10) for aggregate is claimed in any claim hereinbefore, in which at least the surface flow of the water in the separation vessel (32) is a one-way flow towards the immersion device (13) and thereafter towards the first weir (15).

## Patentansprüche

1. Trennvorrichtung (10) für ein Gemenge, die zum Trennen eines schweren Gemenges, selbst in Form von Staub, das aus einem Pulverisier- oder Siebprozeß einlangt, von einem organischen Material, Kompost oder anderen ähnlichen Abfällen geeignet ist, wobei die Trennvorrichtung einen Trennbehälter (32) mit Wasser, Mittel (22-24) für das Einbringen von Wasser, eine Taucheinrichtung (13), einen ersten Überlauf (15) mit einer Drehtrommel (16) und mit einem Fällungsbehälter (20) und Entfernungsmittel (25) aufweist, die mit dem Boden des Trennbehälters (32) zusammenwirken, wobei die Trennvorrichtung (10) dadurch gekennzeichnet ist, daß der Trennbehälter (32) einen dreieckförmigen, vertikalen, längsliegenden Abschnitt mit einer horizontalen Seite besitzt, wobei die zwei unteren, subhorizontalen Seiten merklich unterschiedliche Abmessungen aufweisen, die Entfernungsmittel (25) mit der längeren unteren, subhorizontalen Seite des Trennbehälters (32) zusammenwirken, der erste Überlauf (15) mit einer Drehtrommel (16), die mit einem Streichmesser (17) zusammenwirkt, sich an der oberen Kante der kürzeren, unteren subhorizontalen Seite und stromab von der Taucheinrichtung (13) befindet, ein Bereich (12) zum Herabfallen des Gemenges zwischen den Mitteln (22-24) für das Einbringen des Wassers stromauf von der Taucheinrichtung (13) und der Taucheinrichtung (13) selbst vorhanden ist, die quer zu dem Trennbehälter (32) wirkt und wie eine teilweise eingetauchte Drehtrommel mit Schaufeln ausgebildet ist, und sich auch Skrubberdüsen (23), die mit den Entfernungsmitteln (25) zusammenwirken, an der längeren subhorizontalen Seite des Trennbehälters (32) befinden.

2. Trennvorrichtung (10) für ein Gemenge nach Anspruch 1, bei welcher der Fällungsbehälter (20) einen zweiten Überlauf (19) aufweist, der mit einem Sammelbehälter (29) verbunden ist, wobei sich ein Mittel (18) zum Ausscheiden schwerer Feinteile, die nicht kompostiert werden können, in dem Fällungsbehälter (20) befindet.

3. Trennungsvorrichtung (10) für ein Gemenge nach Anspruch 1 oder 2, bei welcher der Sammelbehälter (29) ein Mittel (30) zum Ausscheiden von Schlämmen enthält.

4. Trennungsvorrichtung (10) für ein Gemenge nach irgendeinem der vorhergehenden Ansprüche, bei welcher die Skrubberdüsen (23) ausgerichtet werden können.

5 Trennungsvorrichtung (10) für ein Gemenge nach irgendeinem der vorhergehenden Ansprüche, bei welcher ein Vorwaschen (22) stromab von dem Fallbereich des zu behandelnden Materials (12), im Zusammenwirken mit dem Auslaßbereich des Wassers des Materials, das durch die Entfernungsmittel (25) ergriffen wird, vorgesehen ist.

6. Trennungsvorrichtung (10) für ein Gemenge nach irgendeinem der vorhergehenden Ansprüche, bei welcher ein weiteres Waschen (24) stromab von dem Vorwaschen (22) vorgesehen ist.

7. Trennungsvorrichtung (10) für ein Gemenge nach irgendeinem der vorhergehenden Ansprüche, die tangential gelegene Waschdüsen (26) im Zusammenwirken mit dem Auslaß des Gemenges (27) aufweist.

8. Trennungsvorrichtung (10) für ein Gemenge nach irgendeinem der vorhergehenden Ansprüche, bei welcher zumindest der Oberflächenfluß des Wassers in dem Trennbehälter (32) ein Fluß in einer Richtung zu der Taucheinrichtung (13) hin und hierauf zu dem ersten Überlauf (15) hin ist.

## Revendications

1. Séparateur (10) pour agrégat convenant pour la séparation des agrégats lourds, même sous la forme de poussière, issus d'un processus de pilage ou de criblage, à partir de matériaux organiques, de compost ou d'autres déchets similaires, ledit séparateur comprenant un réservoir de séparation (32) contenant de l'eau, des dispositifs (22–24) pour l'injection de l'eau, un appareil d'immersion (13), un premier déversoir (15) muni d'un tambour rotatif (16) et d'un réservoir de précipitation (20), et des dispositifs de rétraction (25) agissant conjointement avec le fond du réservoir de séparation (32), ledit séparateur (10) étant caractérisé en ce que le réservoir de séparation (32) possède une section triangulaire, verticale, longitudinale avec un côté horizontal, les deux côtés inférieurs, sous-horizontaux ayant des dimensions sensiblement différentes, les dispositifs de rétraction (25) agissant conjointement avec le côté sous-horizontal inférieur le plus long du réservoir de séparation (32), le premier déversoir (15) muni d'un tambour rotatif (16) agissant conjointement avec un couteau racloir (17), étant inclus à l'arête supérieure du côté sous-horizontal inférieur le plus court et en aval de l'appareil d'immersion (13), une zone (12) pour la pulvérisation de l'agrégat étant comprise entre les dispositifs (22–24) pour l'injection de l'eau en amont de l'appareil d'immersion (13) et l'appareil d'immersion (13) lui-même, qui agit transversalement au réservoir de séparation (32) et est conformé comme un tambour rotatif partiellement immergé, équipé d'aubes, d'ajutages épurateurs (23) agissant conjointement avec les dispositifs de rétraction (25) étant également inclus sur le côté sous-horizontal le plus long du réservoir de séparation (32).

2. Séparateur (10) pour agrégat selon la revendication 1, dans lequel le réservoir de précipitation (20) comprend un second déversoir (19) relié à un réservoir collecteur (29), un dispositif (18) permettant l'extraction des fines lourdes ne pouvant être compostées incluses dans le réservoir de précipitation (20).

3. Séparateur (10) pour agrégat selon la revendication 1 ou 2, dans lequel le réservoir collecteur (29) contient un dispositif (30) permettant l'extraction des boues.

4. Séparation (10) pour agrégat selon l'une quelconque des revendications précédentes, dans lequel les ajutages épurateurs (23) sont orientables.

5. Séparateur (10) pour agrégat selon l'une quelconque des revendications précédentes, dans lequel un pré-lavage (22) est réalisé, en aval de la zone de pulvérisation des matériaux à traiter (12), conjointement avec la zone d'évacuation de l'eau des matériaux engagés par les dispositifs de rétraction (25).

6. Séparateur (10) pour agrégat selon l'une quelconque des revendications précédentes, dans lequel un lavage ultérieur (24) est réalisé en aval du pré-lavage (22).

7. Séparateur (10) pour agrégat selon l'une quelconque des revendications précédentes, dans lequel des ajutages de lavage placés tangentiellement (26) sont prévus conjointement avec la sortie des agrégats (27).

8. Séparateur (10) pour agrégat selon l'une quelconque des revendications précédentes, dans lequel le courant de surface de l'eau dans le réservoir de séparation (32) est un courant à sens unique en direction de l'appareil d'immersion (13) et ensuite, en direction du premier déversoir (15).

fig.1

fig.2

EP 0 228 724 B1